# EUROPEAN PATENT APPLICATION

(11) **EP 4 644 092 A1**
(43) Date of publication of application: **05.11.2025**
(21) Application number: 25173924.9
(22) Date of filing: 02.05.2025
(51) Int. Cl.: B29C 64/106, B33Y 10/00, B33Y 70/00, B33Y 80/00

(54) **COMPOSITIONS AND METHODS FOR 3D PRINTING FOR MOLDING APPLICATIONS**

(30) Priority: 02.05.2024 US 202463641450 P
(71) Applicant: 3D Systems, Inc., Rock Hill, SC 29730 (US)
(72) Inventor: XU, Pingyong, Valencia, CA (US); MAI, Anna Kristen, Rock Hill, SC (US); KEILSOHN, Monica, San Diego, CA (US)
(74) Representative: Dompatent Partnerschaft von Patent- und Rechtsanwälten mbB

(57) **Abstract**

In one aspect, compositions or build materials for use with an additive manufacturing system are described herein. In some embodiments, a composition described herein comprises a compound having the structure of Formula (I) and/or a compound having the structure of Formula (II), wherein the compound having the structure of Formula (I) and/or Formula (II) is present in an amount of 10-35 wt. %, based on the total weight of the composition; and a monomeric curable material having the structure of Formula (III). In some implementations, the monomeric curable material of Formula (III) is present in an amount of 30-50 wt. %, based on the total weight of the composition. In some cases, the composition further comprises an acrylate or acrylamide component. In some instances, the acrylate or acrylamide component is present in an amount of 25-50 wt. %, based on the total weight of the composition.

## Description

### CROSS REFERENCE TO RELATED APPLICATIONS

This application claims priority pursuant to 35 U.S.C. § 119 to U.S. Provisional Patent Application No. 63/641,450, filed May 2, 2024, which is hereby incorporated by reference in its entirety.

### FIELD

The present disclosure relates to compositions and methods for additive manufacturing, including for molding applications.

### BACKGROUND

Three-dimensional (3D) printers and other additive manufacturing systems employ compositions, which are sometimes also known as build materials, inks, or polymerizable liquids, to form various 3D objects, articles, or parts in accordance with computer generated files or other digital representations of objects, articles, or parts. In some instances, the composition is solid at ambient temperatures and converts to liquid at elevated jetting temperatures. In other instances, the composition is liquid at ambient temperatures. Build materials can be formed into 3D objects in various manners, such as by jetting or otherwise depositing the build material onto a substrate. Build materials can also be selectively cured, solidified, or otherwise altered during a build. For example, some 3D printers form 3D articles from a reservoir, vat, or container of a fluid build material or a powdered build material. In some cases, a binder material or a laser or other source is used to selectively solidify or consolidate layers of the build material in a stepwise fashion to provide the 3D article.

Additive manufacturing or 3D printing systems can be used to form articles with various end uses. However, the end use of some articles formed by additive manufacturing can be limited by the build material used to form the article. For example, some articles formed by additive manufacturing cannot tolerate high temperatures, cannot be dissolved or dispersed or removed in a desired manner, and/or cannot provide sufficient mechanical properties for certain end uses. Molding applications can be particularly difficult to realize. Thus, there exists a need for improved compositions or build materials for 3D printing that have improved properties, particularly related to certain end uses that may require high stiffness, such as the formation of thin molds for injection molding or other molding processes, or molds configured to create fine features.

### SUMMARY

In one aspect, compositions or build materials for additive manufacturing are described herein, which, in some embodiments, may offer one or more advantages compared to some previous compositions or build materials. For reference purposes herein in the context of additive manufacturing, the term "build material" (or its plural) can be used interchangeably with the term "ink" or "polymerizable liquid" (or their plurals). In some embodiments, a composition described herein can be used as a build material to print articles, objects, or parts. Moreover, compositions or build materials described herein, in some instances, can be used in a variety of different 3D printers or additive manufacturing systems, such as those based on stereolithography (SLA), digital light processing (DLP), or multi-jet printing (MJP). Additionally, compositions or build materials described herein, in some cases, may be especially useful for the formation of molds via additive manufacturing. Compositions described herein may be used in other ways and for other end uses also, and the use of a composition described herein is not necessarily limited.

In some embodiments, a composition described herein comprises a compound having the structure of Formula (I) and/or a compound having the structure of Formula (II): 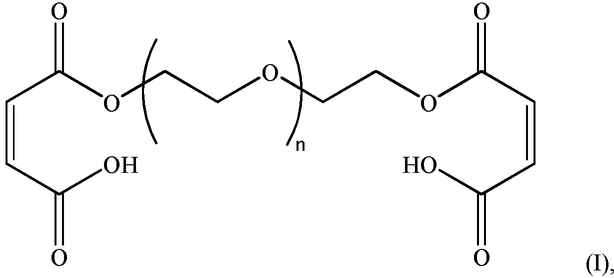 and 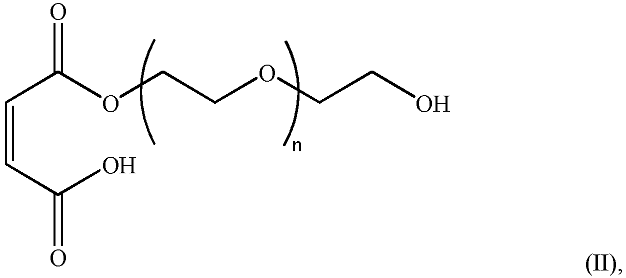 wherein n is an integer between 4 and 40. In some cases, the composition further comprises a monomeric curable material having the structure of Formula (III): 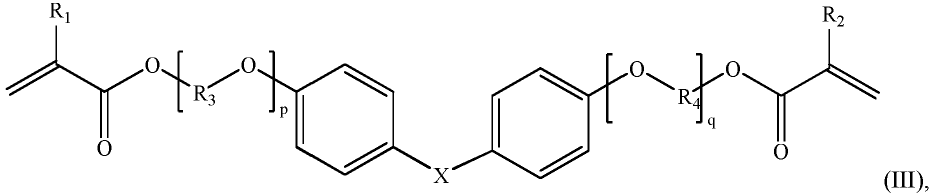 wherein the sum of p and q is an integer between 2 and 30, wherein R₁ and R₂ are each independently H or CH₃, wherein R₃ and R₄ are each independently a C₁-C₄ alkyl, and wherein X is a linear or branched C₁-C₄ alkyl or a group with the structure: 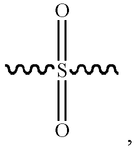 wherein 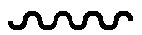 represents a point of attachment to the remainder of the structure of Formula (III).

In some instances, a composition described herein further comprises an acrylate or acrylamide component. In some such embodiments, the acrylate or acrylamide component comprises one or more (meth)acrylates. In some such instances, the one or more (meth)acrylates comprises carboxyethyl acrylate, hydroxypropyl acrylate, acrylic acid, or a mixture thereof. Further, in some cases, the acrylate or acrylamide component comprises one or more acrylamides. In some such instances, the one or more acrylamides comprises dimethyl acrylamide, diethyl acrylamide, acryloyl morpholine, isopropyl acrylamide, dimethyl aminopropyl acrylamide, dimethyl aminopropyl acrylamide, hydroxyethyl acrylamide, or a mixture thereof.

In another aspect, methods of forming a 3D article by additive manufacturing are described herein. In some embodiments, such a method comprises providing a composition or build material described herein, and selectively curing one or more portions of the composition. Any composition described herein may be used. For example, in some cases, the composition comprises a compound having the structure of Formula (I) and/or a compound having the structure of Formula (II), and a monomeric curable material having the structure of Formula (III), as described herein. Moreover, in some instances, providing the composition comprises selectively depositing layers of the composition in a fluid state onto a substrate to form the 3D article. This deposition step may be repeated any desired number of times needed to complete the article.

In still another aspect, printed 3D articles are described herein. Such a printed 3D article can be formed from any composition and using any method described herein. Such printed 3D articles, in some cases, have particular properties compared to some other 3D articles. In some embodiments, for example, the article has a Young's Modulus greater than 100,000 kPa when measured according to ASTM D638.

In yet another aspect, methods of forming a 3D article by molding are described herein. In some embodiments, such a method comprises providing a mold defining an interior volume and injecting a fluid material into the interior volume of the mold. Additionally, in some cases, the method further comprises solidifying the fluid material within the interior volume of the mold to form the article and subsequently removing the mold from the formed article. It is to be understood that the mold can comprise or be formed from any composition or build material described herein. Moreover, as described herein, in some cases, providing the mold comprises forming the mold using additive manufacturing, including using a 3D printing method described herein. In addition, use of a composition or build material described herein may also permit facile removal of the mold following solidification of the fluid material within the mold. In some embodiments, removing the mold from the article comprises dissolving or dispersing the mold in water or an aqueous solution. In some such embodiments, the aqueous solution comprises a glycol.

These and other embodiments are described in greater detail in the detailed description which follows.

### BRIEF DESCRIPTION OF THE DRAWINGS

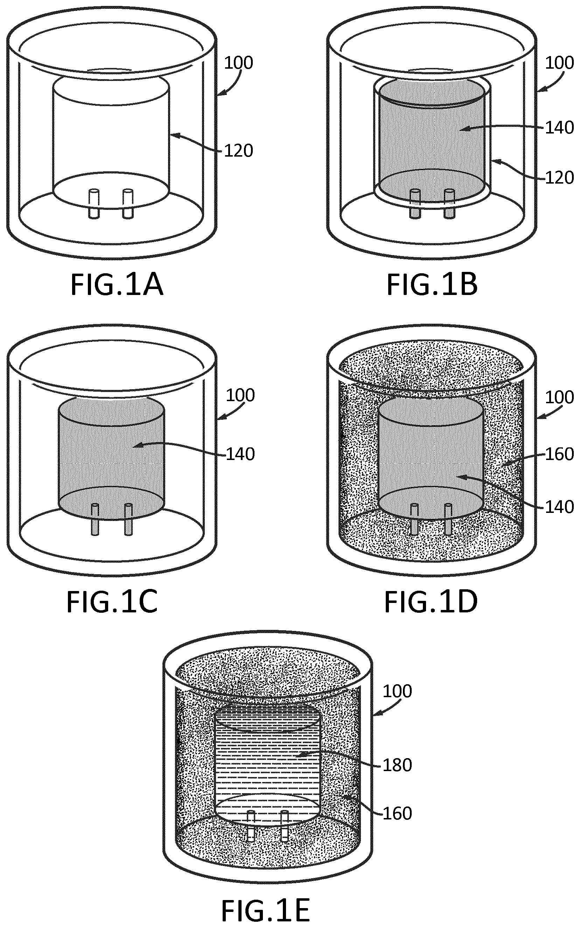

Figure 1A illustrates a perspective view of a 3D printed article that is also a mold, according to one embodiment described herein.
Figure 1B illustrates a perspective view of the 3D printed mold of Figure 1A filled with fluid material that has solidified to form a first article, according to one embodiment described herein.
Figure 1C illustrates a perspective view of the first article of Figure 1B with the mold removed, according to one embodiment described herein.
Figure 1D illustrates a perspective view of the first article of Figure 1C surrounded by a hydrogel material, according to one embodiment described herein.
Figure 1E illustrates a perspective view of a second mold formed from the hydrogel material of Figure 1D, according to one embodiment described herein.

### DETAILED DESCRIPTION

Embodiments described herein can be understood more readily by reference to the following detailed description, examples, and figures. Elements, apparatus, and methods described herein, however, are not limited to the specific embodiments presented in the detailed description, examples, and figures. It should be recognized that these embodiments are merely illustrative of the principles of the present disclosure. Numerous modifications and adaptations will be readily apparent to those of skill in the art without departing from the spirit and scope of the disclosure.

In addition, all ranges disclosed herein are to be understood to encompass any and all subranges subsumed therein. For example, a stated range of "1.0 to 10.0" should be considered to include any and all subranges beginning with a minimum value of 1.0 or more and ending with a maximum value of 10.0 or less, e.g., 1.0 to 5.3, 1 to 4, 3 to 7, 4.7 to 10.0, 3.6 to 7.9, or 5 to 8.

All ranges disclosed herein are also to be considered to include the end points of the range, unless expressly stated otherwise. For example, a range of "between 5 and 10," "from 5 to 10," or "5-10" should generally be considered to include the end points 5 and 10.

Further, when the phrase "up to" is used in connection with an amount or quantity, it is to be understood that the amount is at least a detectable amount or quantity (that is, the amount is a non-zero amount). For example, a material present in an amount "up to" a specified amount can be present from a detectable (or non-zero) amount and up to and including the specified amount.

It is also to be understood that the article "a" or "an" refers to "at least one," unless the context of a particular use requires otherwise.

The terms "three-dimensional printing system," "three-dimensional printer," "printing," and the like generally describe various solid freeform fabrication techniques for making three-dimensional articles or objects by stereolithography (SLA), digital light processing (DLP), selective deposition, jetting, fused deposition modeling (FDM), multi-jet modeling (MJM) or multi-jet printing (MJP), and other additive manufacturing techniques now known in the art or that may be known in the future that use a build material to fabricate three-dimensional objects.

### I. Compositions for Additive Manufacturing

In one aspect, compositions or build materials for use with an additive manufacturing system are described herein. In some embodiments, a composition described herein comprises a compound having the structure of Formula (I) and/or a compound having the structure of Formula (II): 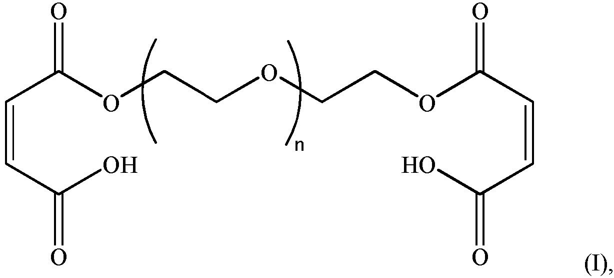 and 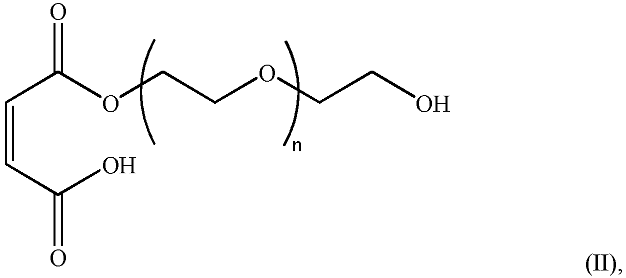 wherein n is an integer between 4 and 40. In some cases, n is an integer between 4 and 14, between 4 and 20, between 6 and 30, between 10 and 40, or between 10 and 20. Other values of n are also possible. Moreover, it is to be understood that a species of Formula (I) can be referred to as "MA-PEG#-MA," where "#" is the approximate weight average molecular weight of the poly(ethylene glycol) or "PEG" portion of the compound. For example, "MA-PEG200-MA" refers to a compound of Formula (I) wherein n has a value corresponding to a PEG moiety having a molecular weight of about 200. Similarly, it is to be understood that a species of Formula (II) can be referred to as "MA-PEG#," where "#" is the approximate weight average molecular weight of the PEG portion of the compound.

In some implementations, the compound having the structure of Formula (I) and/or the compound having the structure of Formula (II) is present in an amount of 10-35 wt. %, based on the total weight of the composition. In some cases, the compound having the structure of Formula (I) and/or the compound having the structure of Formula (II) is present in an amount of 10-35 wt. %, 10-30 wt. %, 10-25 wt. %, 10-20 wt. %, 10-15 wt. %, 15-35 wt. %, 15-30 wt. %, 15-25 wt. %, 15-20 wt. %, 20-35 wt. %, 20-30 wt. %, 20-25 wt. %, 25-35 wt. %, 25-30 wt. %, or 30-35 wt. %.

In addition, in some cases, a composition describe herein further comprises a monomeric curable material having the structure of Formula (III): 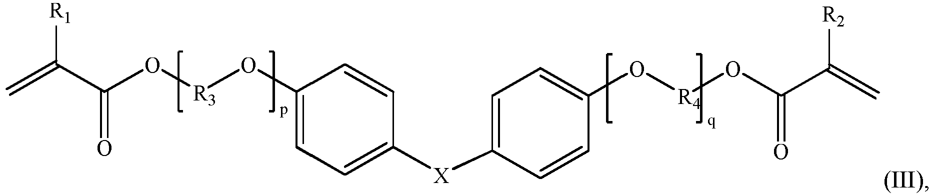 wherein the sum of p and q is an integer between 2 and 30, wherein R₁ and R₂ are each independently H or CH₃, wherein R₃ and R₄ are each independently a C₁-C₄ alkyl, and wherein X is a linear or branched C₁-C₄ alkyl or a group with the structure: 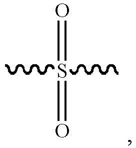 wherein 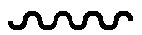 represents a point of attachment to the remainder of the structure of Formula (III). In some instances, in Formula (III), X is C(CH₃)₂. In other cases, in Formula (III), X is CH₂. Non-limiting examples of monomeric curable material for use in some embodiments described herein include ethoxylated (10) bisphenol A diacrylate and ethoxylated (30) bisphenol A diacrylate.

For reference purposes herein, it is to be understood that a "Cₙ-Cₘ alkyl moiety" (e.g., a "C₁-C₄ alkyl moiety") is a bivalent saturated aliphatic radical having from "n" to "m" carbon atoms (e.g., 1 to 4 carbon atoms, and no more than 4 carbon atoms). Moreover, a "Cₙ" moiety in this context has exactly "n" carbon atoms (no more, no less). It is further to be understood that the "n" and "m" may be subscripted or not subscripted, without changing the meaning (e.g., "Cₙ-Cₘ" may sometimes be written as "Cn-Cm" instead). Similarly, in the present disclosure a Cn-Cm "alkyl" moiety may be referred to as an "alkylene" moiety. It will be appreciated by a person of ordinary skill in the art that these terms may be used interchangeably in this context, in view of the relevant principles of chemistry.

In general, the monomeric curable material can be present in a composition described herein in any amount not inconsistent with the technical objectives of the present disclosure. In some embodiments, the monomeric curable material is present in an amount of 30-50 wt. %, 30-45 wt. %, 30-40 wt. %, 30-35 wt. %, 35-50 wt. %, 35-45 wt. %, 35-40 wt. %, 40-50 wt. %, 40-45 wt. %, or 45-50 wt. %, based on the total weight of the composition.

Turning to other components that may be present in a composition described herein, in some instances, a composition described herein may further comprise an acrylate or acrylamide component. In general, the acrylate or acrylamide component of a composition described herein can be present in the composition in any amount not inconsistent with the technical objectives of the present disclosure. In some instances, the acrylate or acrylamide component is present in an amount of 25-50 wt. %, 25-45 wt. %, 25-40 wt. %, 25-35 wt. %, 25-30 wt. %, 30-50 wt. %, 30-45 wt. %, 30-40 wt. %, 30-35 wt. %, 35-50 wt. %, 35-45 wt. %, 35-40 wt. %, 40-50 wt. %, 40-45 wt. %, or 45-50 wt. %, based on the total weight of the composition.

Moreover, in some implementations, the acrylate or acrylamide component comprises one or more (meth)acrylates. It is to be understood that the term "(meth)acrylate" includes an acrylate or a methacrylate or a mixture or combination thereof. Additionally, in some cases, a (meth)acrylate comprises a (meth)acrylate monomer, a (meth)acrylate oligomer, or a mixture thereof.

Further, a (meth)acrylate monomer and/or a (meth)acrylate oligomer described herein can comprise a monofunctional, difunctional, trifunctional, tetrafunctional, pentafunctional, or higher functional (meth)acrylate species. A "monofunctional" (meth)acrylate species, for reference purposes herein, comprises a chemical species that includes one (meth)acrylate moiety. Similarly, a "difunctional" (meth)acrylate species comprises a chemical species that includes two (meth)acrylate moieties; a "trifunctional" (meth)acrylate species comprises a chemical species that includes three (meth)acrylate moieties; a "tetrafunctional" (meth)acrylate species comprises a chemical species that includes four (meth)acrylate moieties; and a "pentafunctional" (meth)acrylate species comprises a chemical species that includes five (meth)acrylate moieties. Thus, in some embodiments, a monofunctional (meth)acrylate component of a composition described herein comprises a mono(meth)acrylate, a difunctional (meth)acrylate component of a composition described herein comprises a di(meth)acrylate, a trifunctional (meth)acrylate component of a composition described herein comprises a tri(meth)acrylate, a tetrafunctional (meth)acrylate component of a composition described herein comprises a tetra(meth)acrylate, and a pentafunctional (meth)acrylate component of a composition described herein comprises a penta(meth)acrylate. Other (meth)acrylate species may also be used.

Moreover, a (meth)acrylate species (such as a monofunctional, difunctional, trifunctional, tetrafunctional, or pentafunctional (meth)acrylate species), in some cases, can comprise or be a relatively low molecular weight species, i.e., a (meth)acrylate monomer (such as a species having a molecular weight below 300, below 200, or below 100), or a relatively high molecular weight species, i.e., a (meth)acrylate oligomer (such as a species having a molecular weight above 300, above 400, above 500, or above 600, and optionally below 10,000, where it is understood that the molecular weight may be a weight average molecular weight in the case of an oligomeric species having a molecular weight distribution). Additionally, in some embodiments, a (meth)acrylate "monomer" has a viscosity of 500 centipoise (cP) or less at 25°C, when measured according to ASTM D2983 (2022 version), while a (meth)acrylate "oligomer" has a viscosity of 1000 cP or more at 25°C, when measured according to ASTM D2983.

As stated above, build materials described herein can comprise a (meth)acrylate monomer. The (meth)acrylate monomer can comprise any (meth)acrylate monomer not inconsistent with the objectives of the present disclosure. In some cases, for instance, the (meth)acrylate monomer comprises one or more hydrophilic or water soluble (meth)acrylates. A "water soluble" species or material, for reference purposes herein, has a solubility in water (or in an acidic or basic aqueous solution described further herein) of at least 1 gram per 1 liter of water (or of aqueous solution) at 25°C. In some cases, a water soluble species or material has a solubility of at least 5 g/L, at least 10 g/L, or at least 100 g/L at 25°C.

In some embodiments described herein, the (meth)acrylate monomer comprises hydrophilic or water soluble mono-, di-, and/or tri(meth)acrylate species. The (meth)acrylate monomer, for example, can comprise one or more of hydroxylalkyl(meth)acrylates (e.g., hydroxypropylacrylate), ethoxylated trimethylol propane triacrylate ("TAC" or trimethylolpropane ethoxylate triacrylate), and various combinations or mixtures thereof. In some embodiments, hydroxyalkyl(meth)acrylates include hydroxyethyl(meth)acrylate, hydroxypropyl(meth)acrylate, hydroxybutyl(meth)acrylate, and/or mixtures thereof. In some implementations, the (meth)acrylate comprises carboxyethyl acrylate, hydroxypropyl acrylate, acrylic acid, or a mixture thereof.

Additionally, in some cases, the (meth)acrylate monomer of a composition described herein comprises a cyclocarbonate (meth)acrylate monomer. In some such instances, the cyclocarbonate (meth)acrylate monomer has the structure of Formula (IV): 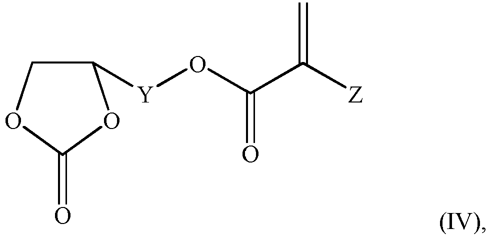
wherein Y is a linear or branched C1-C6 alkylene moiety; and
wherein Z is H or CH₃.

For reference purposes herein, it is to be understood that a "Cn-Cm alkylene moiety" (e.g., a "C1-C4 alkylene moiety") is a bivalent saturated aliphatic radical having from "n" to "m" carbon atoms (e.g., 1 to 4 carbon atoms, and no more than 4 carbon atoms). In some preferred embodiments, Y is a linear or branched C1-C4 alkylene moiety, such as CH₂, which is especially preferred. Additionally, in some embodiments, Z is H. Further, in some instances, Y is CH₂ and Z is H. Thus, in some cases, the cyclocarbonate (meth)acrylate monomer of a composition described herein has the structure of Formula (V):

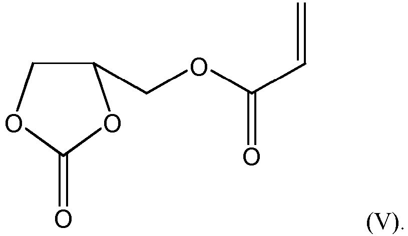

It is to be understood that the (meth)acrylate monomer of a composition described herein can include a combination of monomeric species, such as a combination of two or more of the (meth)acrylate species described above. For example, in some cases, the (meth)acrylate monomer comprises one or more hydroxyalkyl(meth)acrylates, one or more poly(ethylene glycol) acrylates, one or more poly(ethylene glycol) diacrylates, one or more cyclocarbonate (meth)acrylates, or a combination of two or more of the foregoing. Thus, the present disclosure contemplates many combinations and compositions of (meth)acrylate monomers that can be included in example implementations, though they are not explicitly enumerated herein.

Compositions described herein, in some embodiments, also comprise a (meth)acrylate oligomer. Any (meth)acrylate oligomer species not inconsistent with the technical objectives of the present disclosure may be used. In some preferred embodiments, the (meth)acrylate oligomer comprises one or more hydrolysable oligomeric species. A "hydrolysable" oligomeric species, for reference purposes herein, includes at least one hydrolysable bond. In some cases, the hydrolysable bond is part of the repeating unit of the oligomer. For example, in some instances, a hydrolysable oligomeric species comprises one or more urethane bonds, one or more ester bonds, or one or more carbonate bonds in the backbone of the oligomeric species. As understood by one of ordinary skill in the art, such a bond may be hydrolyzed by water, including in a relatively facile manner when exposed to water or an aqueous solution described herein for a time period and at a temperature described herein.

Moreover, in some embodiments, a (meth)acrylate oligomer can be bifunctional or higher functional, as well as being hydrolysable. Additionally, in some embodiments, a majority of the total amount of the (meth)acrylate oligomer is bifunctional or higher functional. For example, in some cases, at least 60 wt. %, at least 70 wt. %, at least 80 wt. %, or at least 90 wt. % of the (meth)acrylate oligomer component is bifunctional or higher functional, where the foregoing weight percentages are based on the total amount of the (meth)acrylate oligomer component.

In some implementations, a (meth)acrylate oligomer of a composition described herein comprises a poly(ethylene glycol) diacrylate (PEGDA) component. With reference to the poly(ethylene glycol) diacrylate component as used herein, the PEGDA component can comprise a single poly(ethylene glycol) diacrylate species or multiple poly(ethylene glycol) diacrylate species of differing molecular weights. In some embodiments, species of the PEGDA component have a weight average molecular weight of 0.1 kiloDalton (kDa) to 20 kDa or 0.2 to 20 kDa.

The molecular weight of individual species of PEGDA, for example, can fall within one or more ranges set forth in Table 1.

**Table 1. Poly(ethylene glycol) Diacrylate Molecular Weight (kDa).**

| |
|---|
| 0.3-1 |
| 0.3-20 |
| 0.5-1 |
| 3-5 |
| 3-10 |
| 10-20 |
| 0.5-5 |

Any combination or mixture of poly(ethylene glycol) diacrylates of differing molecular weights is contemplated. In some cases, the PEGDA component comprises a mixture of two of more PEGDA species each having a weight average molecular weight from 0.5 to 5 kDa.

In some embodiments of a composition described herein, a (meth)acrylate oligomer comprises a urethane acrylate oligomer, a urethane methacrylate oligomer, a polyether urethane oligomer, an aliphatic polyester urethane acrylate oligomer, or a combination of two or more of the foregoing. Additionally, in some cases, the (meth)acrylate oligomer can comprise an aliphatic urethane diacrylate oligomer.

Some non-limiting examples of commercially available (meth)acrylate oligomers useful in some embodiments described herein include the following: monofunctional urethane acrylate, commercially available from RAHN USA under the trade name GENOMER 1122; an aliphatic urethane diacrylate, commercially available from ALLNEX under the trade name EBECRYL 8402; an aliphatic urethane diacrylate oligomer, commercially available from IGM Resins under the trade name PHOTOMER 6210; an aliphatic urethane diacrylate oligomer, commercially available from IGM Resins under the trade name PHOTOMER 6710; a multifunctional acrylate oligomer, commercially available from DYMAX Corporation under the trade name BR-952; aliphatic polyether urethane acrylate, commercially available from DYMAX Corporation under the trade name BR-371S; and polyether urethane methacrylate, commercially available from DYMAX Corporation under the trade name BR-541 MD. Other commercially available oligomeric (meth)acrylates may also be used.

Urethane (meth)acrylates suitable for use in compositions described herein, in some cases, can be prepared in a known manner, typically by reacting a hydroxyl-terminated urethane with acrylic acid or methacrylic acid to give the corresponding urethane (meth)acrylate, or by reacting an isocyanate-terminated prepolymer with hydroxyalkyl acrylates or methacrylates to give the urethane (meth)acrylate. Suitable processes are disclosed, inter alia, in EP-A 114 982 and EP-A 133 908. The weight average molecular weight of such (meth)acrylate oligomers, in some cases, can be from about 500 to 6,000. Urethane (meth)acrylates are also commercially available from SARTOMER under the product names CN980, CN981, CN975 and CN2901. In some embodiments, urethane acrylate oligomers are employed in compositions described herein. Suitable urethane acrylates can include difunctional aliphatic urethane acrylates from DYMAX Corporation under the trade designations BR-741 and BR-970. In some embodiments, a (meth)acrylate oligomer comprises aliphatic polyester urethane acrylate or aliphatic polyether urethane acrylate. Commercial examples of these oligomeric species are available from DYMAX Corporation under the trade designations BR-7432 and BR-543, respectively.

In some instances, the acrylate or acrylamide component of a composition described herein comprises one or more acrylamides. For reference purposes herein, it is to be understood that an "acrylamide" can comprise a chemical species comprising at least one acrylamide moiety or functional group. In some embodiments, the one or more acrylamides comprises dimethyl acrylamide, diethyl acrylamide, acryloyl morpholine, isopropyl acrylamide, dimethyl aminopropyl acrylamide, dimethyl aminopropyl acrylamide, hydroxyethyl acrylamide, or a mixture thereof.

In general, the one or more acrylamides can be present in a composition described herein in any amount not inconsistent with the technical objectives of the present disclosure. In some embodiments, the one or more acrylamides is present in an amount of 10-40 wt. %, based on the total weight of the composition. In some cases, the one or more acrylamides is present in an amount of 10-35 wt. %, 10-30 wt. %, 10-25 wt. %, 10-20 wt. %, 10-15 wt. %, 15-40 wt. %, 15-35 wt. %, 15-30 wt. %, 15-25 wt. %, 15-20 wt. %, 20-40 wt. %, 20-35 wt. %, 20-30 wt. %, 20-25 wt. %, 25-40 wt. %, 25-35 wt. %, 25-30 wt. %, 30-40 wt. %, 30-35 wt. %, or 35-40 wt. %, based on the total weight of the composition.

Turning to another possible component of a composition described herein, compositions described herein can also comprise a photoinitiator component. Any photoinitiator not inconsistent with the objectives of the present disclosure may be used in a composition described herein. In some embodiments, for example, the photoinitiator component comprises an alpha-cleavage type (unimolecular decomposition process) photoinitiator or a hydrogen abstraction photosensitizer-tertiary amine synergist, operable to absorb light between about 250 nm and about 400 nm, between about 250 nm and 405 nm, or between about 300 nm and about 385 nm, to yield free radical(s). Examples of alpha cleavage photoinitiators are Irgacure 184 (CAS 947-19-3), Irgacure 369 (CAS 119313-12-1), and Irgacure 819 (CAS 162881-26-7). An example of a photosensitizer-amine combination is Darocur BP (CAS 119-61-9) with diethylaminoethylmethacrylate.

In addition, in some instances, photoinitiators comprise benzoins, including benzoin, benzoin ethers, such as benzoin methyl ether, benzoin ethyl ether and benzoin isopropyl ether, benzoin phenyl ether and benzoin acetate, acetophenones, including acetophenone, 2,2-dimethoxyacetophenone and 1,1-dichloroacetophenone, benzil, benzil ketals, such as benzil dimethyl ketal and benzil diethyl ketal, anthraquinones, including 2-methylanthraquinone, 2-ethylanthraquinone, 2-tert-butylanthraquinone, 1-chloroanthraquinone and 2-amylanthraquinone, triphenylphosphine, benzoylphosphine oxides, such as 2,4,6-trimethylbenzoyldiphenylphosphine oxide (Lucirin TPO), benzophenones, such as benzophenone and 4,4'-bis(N,N'-dimethylamino)benzophenone, thioxanthones and xanthones, acridine derivatives, phenazine derivatives, quinoxaline derivatives or 1-phenyl-1,2-propanedione, 2-O-benzoyl oxime, 1-aminophenyl ketones or 1-hydroxyphenyl ketones, such as 1-hydroxycyclohexyl phenyl ketone, phenyl 1-hydroxyisopropyl ketone and 4-isopropylphenyl 1-hydroxyisopropyl ketone.

Suitable photoinitiators can also comprise photoinitiators operable for use with a HeCd laser radiation source, including acetophenones, 2,2-dialkoxybenzophenones and 1-hydroxyphenyl ketones, such as 1-hydroxycyclohexyl phenyl ketone or 2-hydroxyisopropyl phenyl ketone (=2-hydroxy-2,2-dimethylacetophenone). Additionally, in some cases, suitable photoinitiators comprise those operable for use with an Ar laser radiation source including benzil ketals, such as benzil dimethyl ketal. In some embodiments, a suitable photoinitiator comprises an α-hydroxyphenyl ketone, benzil dimethyl ketal or 2,4,6-trimethylbenzoyldiphenylphosphine oxide or a mixture thereof.

Another class of photoinitiators that may be included in a composition described herein comprises ionic dye-counter ion compounds capable of absorbing actinic radiation and generating free radicals for polymerization initiation. In some embodiments, composition containing ionic dye-counter ion compounds can be polymerized upon exposure to visible light within the adjustable wavelength range of about 400 nm to about 700 nm. Ionic dye-counter ion compounds and their mode of operation are disclosed in EP-A-0 223 587 and U.S. Pat. Nos. 4,751,102; 4,772,530; and 4,772,541.

In some cases, a photoinitiator that may be included in a composition described herein comprises a water-soluble pyrrolidone or phosphine oxide such as a monoacylphosphine oxide (MAPO) salt or bisacylphosphine oxide (BAPO) salt, which may in some instances be a sodium or lithium MAPO or BAPO salt. In some embodiments, a photoinitiator included in a composition described herein has a structure of Formula (VI) or Formula (VII): 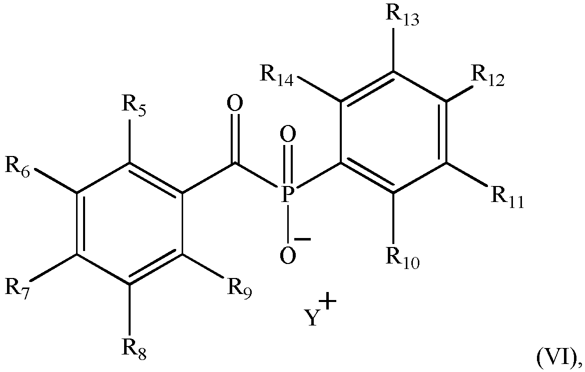 and 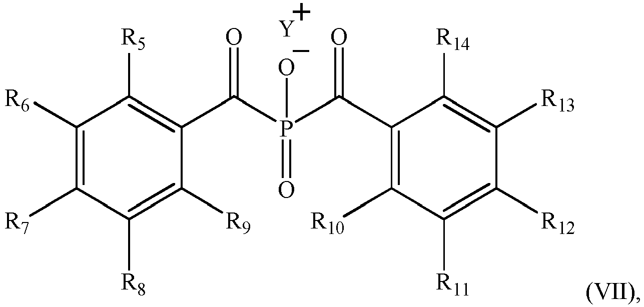 wherein Y is Na or Li, and wherein each of R₅-R₁₄ is independently H, CH₃, or CH₂CH₃. For example, in some preferred embodiments, each of R₅, R₇, and R₉ in Formula (VI) is CH₃, and each of R₆, R₈, R₁₀, R₁₁, R₁₂, R₁₃, and R₁₄ is H. Such a species can be referred to herein as "NaP", "Na-TPO", "Sodium TPO", or "Sodium TPO-L" when Y is Na, and as "LiP", "Li-TPO", "Lithium TPO", or "Lithium TPO-L" when Y is Li. In other preferred embodiments, each of R₅, R₇, R₉, R₁₀, R₁₂, and R₁₄ in Formula (VII) is CH₃, and each of R₆, R₈, R₉, and R₁₃ is H. Such a species can be referred to herein as BAPO-ONa when Y is Na, and as BAPO-OLi when Y is Li. It is further to be understood with reference to Formula (VI) and Formula (VII) above that these structures also represent resonance structures, or structures in which (for drawing convenience) the P-O single bond and the P-O double bond "switch places" in the depiction of the structure (e.g., such that the P-O double bond points "up" like the two adjacent C-O double bonds, rather than pointing "down" as depicted above).

A photoinitiator component can be present in a composition described herein in any amount not inconsistent with the objectives of the present disclosure. In some embodiments, a photoinitiator component is present in a composition in an amount of up to about 7 wt. %, up to about 5 wt. %, up to about 3 wt. %, or up to about 2 wt. %, based on the total weight of the composition. In some cases, a photoinitiator is present in an amount of about 0.1-7 wt. %, 0.1-5 wt. %, 0.1-3 wt. %, 0.1-2 wt. %, 0.5-5 wt. %, 0.5-3 wt. %, 0.5-2 wt. %, 1-7 wt. %, 1-5 wt. %, 1-3 wt. %, or 2-3 wt. %, based on the total weight of the composition.

It is to be further understood that the amounts (weight percents) described in the immediately preceding paragraph refer to photoinitiators that are non-oligomeric and non-polymeric. That is, the amounts described above refer to "monomeric" or "molecular" photoinitiators, which may, for instance, have a molecular weight of less than 400. However, it is also to be understood that oligomeric or polymeric photoinitiators may be used in compositions and methods described herein. But in such an instance (when an oligomeric or polymeric photoinitiator is used), then the amounts (weight percents) above are to be calculated without taking into account the weight of the oligomeric or polymeric portion or moiety of the oligomeric or polymeric photoinitiator. In other words, to determine the overall amount (weight percent) of the oligomeric or polymeric photoinitiator that is present in the composition, the calculation (specifically, the numerator) should be based on only the molecular weight of the photoactive moiety of the photoinitiator, not on the molecular weight(s) of the remaining moieties or repeating units of the oligomeric or polymeric photoinitiator (for purposes of the present disclosure).

Moreover, in some instances, compositions described herein can also comprise at least one colorant. Such a colorant of a composition described herein can be a particulate colorant, such as a particulate pigment, or a molecular colorant, such as a molecular dye. Any such particulate or molecular colorant not inconsistent with the technical objectives of the present disclosure may be used. In some cases, for instance, the colorant of a composition comprises an inorganic pigment, such as TiO₂ and/or ZnO. In some embodiments, the colorant of a composition comprises a colorant for use in a RGB, sRGB, CMY, CMYK, L*a*b*, or Pantone^{®} colorization scheme. Moreover, in some cases, a particulate colorant described herein has an average particle size of less than about 5 µm, or less than about 1 µm. In some instances, a particulate colorant described herein has an average particle size of less than about 500 nm, such as an average particle size of less than about 400 nm, less than about 300 nm, less than about 250 nm, less than about 200 nm, or less than about 150 nm. In some instances, a particulate colorant has an average particle size of about 50-5000 nm, about 50-1000 nm, or about 50-500 nm.

A colorant can be present in a composition described herein in any amount not inconsistent with the technical objectives of the present disclosure. In some cases, colorant is present in the composition in an amount up to about 2 wt. %, or an amount of about 0.005-2 wt. %, 0.01-2 wt. %, 0.01-1.5 wt. %, 0.01-1 wt. %, 0.01-0.5 wt. %, 0.1-2 wt. %, 0.1-1 wt. %, 0.1-0.5 wt. %, or 0.5-1.5 wt. %, based on the total weight of the composition. In some embodiments, a composition described herein excludes colorant as described above.

Compositions described herein can be produced in any manner not inconsistent with the technical objectives of the present disclosure. In some embodiments, for instance, a method for the preparation of a composition described herein comprises the steps of mixing the components of the composition, optionally melting the mixture, and filtering the (optionally molten) mixture. In some cases, the components are mixed and optionally melted at a temperature between about 25°C and about 35°C, or at a temperature in the range of 25-55°C, 35-65°C, or 45-75°C. In some instances in which it is desirable or necessary to melt one or more solid components of the composition, mixing and/or melting can be carried about a temperature in a range from about 75°C to about 85°C. In some embodiments, a composition described herein is produced by placing all components of the composition in a reaction vessel, optionally heating the resulting mixture, and stirring the resulting mixture at a temperature between about 25°C and about 75°C or a temperature ranging from about 75°C to about 85°C. The stirring (and optionally the heating) are continued until the mixture attains a substantially homogenized liquid (or molten) state. In general, the liquid (or molten) mixture can be filtered while in a flowable state to remove any large undesirable particles that may interfere with jetting or extrusion or other printing process. The filtered mixture can then be cooled to ambient temperatures (if cooling is needed) and stored until ready for use in a 3D printing system.

### II. Methods of Forming a 3D Article by Additive Manufacturing

In another aspect, methods of forming or "printing" a 3D article or object by additive manufacturing are described herein. Methods of forming a 3D article or object described herein can include forming the 3D article from a plurality of layers of a composition described herein in a layer-by-layer manner. In such cases, the composition can be used as a build material. It is also possible, in some embodiments, to use a composition described herein as a support material. Methods of forming a 3D article by additive manufacturing can also include forming the object in a manner other than a layer-by-layer manner. Any composition described hereinabove in Section I may be used in a method described herein. For example, in some embodiments, a method described herein comprises providing a composition comprising a compound having the structure of Formula (I) or Formula (II), as described in Section I, and a monomeric curable material having the structure of Formula (III), as described in Section I.

In some cases, a method described herein comprises providing a build material comprising a composition described above, and selectively curing a portion of the build material using incident curing radiation having a Gaussian distribution of wavelengths and a peak wavelength at the wavelength λ. Moreover, in some embodiments described herein, the build material is selectively cured according to a digital file or image of the desired article, such as according to preselected computer aided design (CAD) parameters. Moreover, in some cases, one or more layers of a build material described herein has a thickness of about 10 µm to about 100 µm, about 10 µm to about 80 µm, about 10 µm to about 50 µm, about 10 µm to about 40 µm, about 20 µm to about 100 µm, about 20 µm to about 80 µm, or about 20 µm to about 40 µm. Other thicknesses are also possible.

Performing a printing process described herein can provide a printed 3D article from a build material described herein that has a high feature resolution. The "feature resolution" of an article, for reference purposes herein, can be the smallest controllable physical feature size of the article or the pixel or voxel size of the printing process, where it is understood that "pixel" and "voxel" refer to the CAD parameter or other digital model of the article. In some embodiments, a printed article described herein has an average voxel size greater than 50 µm per side on average (e.g., when the average voxel size corresponds to a volume having an average length in all three dimensions of 50-100 µm, 50-75 µm, 60-100 µm, 60-80 µm, or 60-70 µm). In other cases, a printed article described herein has an average voxel size of less than 50 µm, less than 40 µm, less than 30 µm, or less than 20 µm per side on average (e.g., when the average voxel size corresponds to a volume having an average length in all three dimensions of 10-45 µm, 10-40 µm, 10-30 µm, 10-25 µm, 10-20 µm, 15-45 µm, or 15-40 µm).

Additionally, it is to be understood that methods of printing a 3D article described herein can include, for example, MJP, DLP, or SLA 3D printing methods. For example, in some instances, a MJP method of printing a 3D article comprises selectively depositing layers of a build material described herein in a fluid state onto a substrate, such as a build pad of a 3D printing system. In addition, in some embodiments, a method described herein further comprises supporting at least one of the layers of the build material with a support material. Any support material not inconsistent with the objectives of the present disclosure may be used.

A method described herein can also comprise curing the layers of the build material, including with curing radiation described above (such as curing radiation having a peak wavelength λ). Moreover, curing can comprise polymerizing one or more polymerizable moieties or functional groups of one or more components of the build material. In some cases, a layer of deposited build material is cured prior to the deposition of another or adjacent layer of build material. Additionally, curing one or more layers of deposited build material, in some embodiments, is carried out by exposing the one or more layers to electromagnetic radiation, such as ultraviolet (UV) light, visible light, or infrared light, as described above.

It should further be noted that a wavelength λ used to cure a material according to a method described herein can be any wavelength not inconsistent with the objectives of the present disclosure. For example, in some cases, λ is a wavelength in the ultraviolet (UV) or visible region of the electromagnetic spectrum. In some cases, the peak wavelength λ is in the infrared (IR) region of the electromagnetic spectrum. In some embodiments, the wavelength λ is between 250 nm and 400 nm, between 300 nm and 385 nm, or between 385 nm and 405 nm. In other cases, the wavelength λ is between 600 nm and 800 nm or between 900 nm and 1.3 µm. However, the precise wavelength λ is not particularly limited.

Further details regarding various methods, including "material deposition" methods (such as MJP) or "vat polymerization" methods (such as SLA or DLP), are provided below.

### A. Material Deposition Methods

In a material deposition method, one or more layers of a build material described herein are selectively deposited onto a substrate and cured. Curing of the build material may occur after selective deposition of one layer, each layer, several layers, or all layers of the build material.

In some instances, a build material described herein (e.g., a composition described hereinabove in Section I) is selectively deposited in a fluid state onto a substrate, such as a build pad of a 3D printing system. Selective deposition may include, for example, depositing the build material according to preselected CAD parameters or other preselected parameters based on a digital file, image, or model of the desired article. For example, in some embodiments, a CAD file drawing corresponding to a desired 3D article to be printed is generated and sliced into a sufficient number of horizontal slices. Then, the build material is selectively deposited, layer by layer, according to the horizontal slices of the CAD file drawing to print the desired 3D article. A "sufficient" number of horizontal slices is the number necessary for successful printing of the desired 3D article, e.g., to produce it accurately and precisely.

Further, in some embodiments, a preselected amount of build material described herein is heated to the appropriate temperature and jetted through a print head or a plurality of print heads of a suitable inkjet printer to form a layer on a print pad in a print chamber. In some cases, each layer of build material is deposited according to preselected CAD parameters or other preselected parameters based on a digital file, image, or model of the desired article. A suitable print head to deposit the build material, in some embodiments, is a piezoelectric print head. Additional suitable print heads for the deposition of build material and support material described herein are commercially available from a variety of ink jet printing apparatus manufacturers. For example, Xerox, Hewlett Packard, or Ricoh print heads may be used in some instances.

Additionally, in some embodiments, a build material described herein remains substantially fluid upon deposition. Alternatively, in other instances, the build material exhibits a phase change upon deposition and/or solidifies upon deposition. Moreover, in some cases, the temperature of the printing environment can be controlled so that the jetted droplets of build material solidify on contact with the receiving surface. In other embodiments, the jetted droplets of build material do not solidify on contact with the receiving surface, remaining in a substantially fluid state. Additionally, in some instances, after each layer is deposited, the deposited material is planarized and cured with electromagnetic (e.g., UV, visible, or infrared light) radiation prior to the deposition of the next layer. Optionally, several layers can be deposited before planarization and curing, or multiple layers can be deposited and cured followed by one or more layers being deposited and then planarized without curing. Planarization corrects the thickness of one or more layers prior to curing the material by evening the dispensed material to remove excess material and create a uniformly smooth exposed or flat up-facing surface on the support platform of the printer. In some embodiments, planarization is accomplished with a wiper device, such as a roller, which may be counter-rotating in one or more printing directions but not counter-rotating in one or more other printing directions. In some cases, the wiper device comprises a roller and a wiper that removes excess material from the roller. Further, in some instances, the wiper device is heated. It should be noted that the consistency of the jetted build material described herein prior to curing, in some embodiments, should desirably be sufficient to retain its shape and not be subject to excessive viscous drag from the planarizer.

Moreover, a support material, when used, can be deposited in a manner consistent with that described hereinabove for the build material. The support material, for example, can be deposited according to the preselected CAD parameters (or other parameters described herein) such that the support material is adjacent or continuous with one or more layers of the build material. Jetted droplets of the support material, in some embodiments, solidify or freeze on contact with the receiving surface. In some cases, the deposited support material is also subjected to planarization, curing, or planarization and curing. Any support material not inconsistent with the objectives of the present disclosure may be used.

Layered deposition of the build material and support material can be repeated until the 3D article has been formed. In some embodiments, a method of printing a 3D article further comprises removing the support material from the build material. The support material can be removed in any manner not inconsistent with the technical objectives of the present disclosure. In some cases, for instance, removing the support material comprises melting the support material. In some such embodiments, the support material has a melting point that is at least 20°C, at least 30°C, at least 40°C, at least 50°C, at least 70°C, or at least 100°C lower than a melting point, softening point, heat deflection temperature (HDT), or glass transition temperature (T_{g}) of the build material. In some such cases, the support material comprises or is formed from a wax. Moreover, in some preferred embodiments described herein, the support material is not removed by dissolving or dispersing the support material in water or using an aqueous solution described herein.

Curing of the build material may occur after selective deposition of one layer of build material, of each layer of build material, of several layers of build material, or of all layers of the build material necessary to print the desired 3D article. In some embodiments, a partial curing of the deposited build material is performed after selective deposition of one layer of build material, each layer of build material, several layers of build material, or all layers of the build material necessary to print the desired 3D article. A "partially cured" build material, for reference purposes herein, is one that can undergo further curing. For example, a partially cured build material is up to about 30% polymerized or cross-linked or up to about 50% polymerized or cross-linked. In some embodiments, a partially cured build material is up to about 60%, up to about 70%, up to about 80%, up to about 90%, or up to about 95% polymerized or cross-linked.

Partial curing of the deposited build material can include irradiating the build material with an electromagnetic radiation source or photocuring the build material (including with curing radiation described hereinabove). Any electromagnetic radiation source not inconsistent with the objectives of the present disclosure may be used, e.g., an electromagnetic radiation source that emits UV, visible or infrared light. For example, in some embodiments, the electromagnetic radiation source can be one that emits light having a wavelength from about 300 nm to about 900 nm, e.g., a Xe arc lamp.

Further, in some embodiments, a post-curing is performed after partially curing is performed. For example, in some cases, post-curing is carried out after selectively depositing all layers of the build material necessary to form a desired 3D article, after partially curing all layers of the build material, or after both of the foregoing steps have been performed. Moreover, in some embodiments, post-curing comprises photocuring, including with curing radiation described hereinabove having a peak wavelength λ. Again, any electromagnetic radiation source not inconsistent with the objectives of the present disclosure may be used for a post-curing step described herein. For example, in some embodiments, the electromagnetic radiation source can be a light source that has a higher energy, a lower energy, or the same energy as the electromagnetic radiation source used for partial curing. In some cases wherein the electromagnetic radiation source used for post-curing has a higher energy (i.e., a shorter wavelength) than that used for partial curing, a Xe arc lamp can be used for partial curing and a Hg lamp can be used for post-curing.

Additionally, after post-curing, in some cases, the deposited layers of build material are at least about 80% polymerized or cross-linked or at least about 85% polymerized or cross-linked. In some embodiments, the deposited layers of build material are at least about 90%, at least about 95%, at least about 98%, or at least about 99% polymerized or cross-linked. In some instances, the deposited layers of build material are about 80-100%, about 80-99%, about 80-95%, about 85-100%, about 85-99%, about 85-95%, about 90-100%, or about 90-99% polymerized or cross-linked.

The degree of polymerization or cross-linking can be determined using any protocol or method not inconsistent with the technical objectives of the present disclosure, such as by determining the percentage of monomers incorporated into the polymer network (e.g., based on molecular weight of the polymer compared to the molecular weight of the monomer, or based on the total polymer mass compared to the theoretical maximum of the total polymer mass) or by determining the amount of unincorporated monomers. When more than one method is used to determine a degree of polymerization or cross-linking, the results of the methods can be averaged to obtain a percentage described herein. It is further to be understood that the degree of polymerization or cross-linking described herein is different than "degree of polymerization" defined as the number of repeating units in a polymer molecule.

### B. Vat Polymerization Methods

It is also possible to form a 3D article from a build material described herein using a vat polymerization method, such as an SLA or DLP method. Thus, in some cases, a method of printing a 3D article described herein comprises retaining a build material described herein in a fluid state in a container and selectively applying energy (particularly, for instance, the curing radiation having the peak wavelength λ) to the build material in the container to solidify at least a portion of a fluid layer of the build material, thereby forming a solidified layer that defines a cross-section of the 3D article. Additionally, a method described herein can further comprise raising or lowering the solidified layer of build material to provide a new or second fluid layer of unsolidified build material at the surface of the fluid build material in the container, followed by again selectively applying energy (e.g., the curing radiation) to the build material in the container to solidify at least a portion of the new or second fluid layer of the build material to form a second solidified layer that defines a second cross-section of the 3D article. Further, the first and second cross-sections of the 3D article can be bonded or adhered to one another in the z-direction (or build direction corresponding to the direction of raising or lowering recited above) by the application of the energy for solidifying the build material. Moreover, in some instances, the electromagnetic radiation has an average wavelength of 300-900 nm, and in other embodiments the electromagnetic radiation has an average wavelength that is less than 300 nm. In some cases, the curing radiation is provided by a computer controlled laser beam or other light source, such as a DLP light source. In addition, in some cases, raising or lowering a solidified layer of build material is carried out using an elevator platform disposed in the container of fluid build material. A method described herein can also comprise planarizing a new layer of fluid build material provided by raising or lowering an elevator platform. Such planarization can be carried out, in some cases, by a wiper or roller.

It is further to be understood that the foregoing process can be repeated a desired number of times to provide the 3D article. For example, in some cases, this process can be repeated "n" number of times, wherein n can be up to about 100,000, up to about 50,000, up to about 10,000, up to about 5000, up to about 1000, or up to about 500. Thus, in some embodiments, a method of printing a 3D article described herein can comprise selectively applying energy (e.g., curing radiation of peak wavelength λ) to a build material in a container to solidify at least a portion of an nth fluid layer of the build material, thereby forming an nth solidified layer that defines an nth cross-section of the 3D article, raising or lowering the nth solidified layer of build material to provide an (n+1)th layer of unsolidified build material at the surface of the fluid build material in the container, selectively applying energy to the (n+1)th layer of build material in the container to solidify at least a portion of the (n+1)th layer of the build material to form an (n+1)th solidified layer that defines an (n+1)th cross-section of the 3D article, raising or lowering the (n+1)th solidified layer of build material to provide an (n+2)th layer of unsolidified build material at the surface of the fluid build material in the container, and continuing to repeat the foregoing steps to form the 3D article. Further, it is to be understood that one or more steps of a method described herein, such as a step of selectively applying energy (e.g., curing radiation described herein) to a layer of build material, can be carried out according to an image of the 3D article in a computer-readable format or digital format. General methods of 3D printing using stereolithography are further described, inter alia, in U.S. Patents 5,904,889 and 6,558,606.

In a vat polymerization method such as described above, the build material may be partially cured as described in Section IIA above. For example, in some embodiments, selectively applying energy to the build material in the container to solidify at least a portion of a fluid layer of the build material may include partially curing at least a portion of a fluid layer of the build material. In other embodiments, partial curing of at least a portion of a fluid layer of the build material may occur after a first layer of the build material is provided and solidified, before or after a second layer of the build material is provided or solidified, or before or after one, several, or all subsequent layers of the build material are provided or solidified.

Additionally, in some embodiments of a vat polymerization method described herein, after partial curing or after the desired 3D article is formed, post-curing as described in Section IIA above may be performed. The desired 3D article may be, for example, an article that corresponds to the design in a CAD file or other digital file, image, or model corresponding to the desired 3D article.

### III. Printed 3D Articles

In another aspect, printed 3D articles are described herein. In some embodiments, a printed 3D article is formed from a composition described herein and/or using a method of additive manufacturing described herein. Any composition described hereinabove in Section I may be used. For example, in some cases, the composition comprises a compound having the structure of Formula (I) or Formula (II), and a monomeric curable material having the structure of Formula (III), as described in Section I. Similarly, any method described hereinabove in Section II may be used to form an article according to the present disclosure.

In some instances, printed 3D articles are described herein that may have particular properties. In such cases, for example, a printed three-dimensional article formed from a composition or method described herein has a Young's Modulus greater than 100,000 kPa when measured according to ASTM D638 (2022 version).

A composition and/or method according to the present disclosure can be used to form a variety of articles by additive manufacturing, without particular limitation. Similarly, articles printed according to methods described herein can find application in a variety of fields. However, in some preferred embodiments, the article is a mold, such as an eggshell mold or other mold for use in molding applications, such as injection molding or eggshell molding. In some such embodiments, the eggshell mold has an average wall thickness of 10 mm or less or 5 mm or less. In some cases, the eggshell mold has an average wall thickness of 1-10 mm or 1-5 mm. Other articles can also be formed by a method of additive manufacturing described herein. The average wall thickness of a mold can be measured in any manner not inconsistent with the technical objectives of the present disclosure. In some instances, the average wall thickness is measured based on all sides of the mold, or on all sides except one side of the mold.

### IV. Methods of Forming a 3D Article by Molding

In another aspect, methods of forming a 3D article by molding are described herein. In some embodiments, such a method comprises providing a mold defining an interior volume and injecting a fluid material into the interior volume of the mold. In some cases, the method further comprises solidifying the fluid material within the interior volume of the mold to form the article and subsequently removing the mold from the formed article. It is to be understood that the mold can comprise or be formed from a composition described herein. Any composition described hereinabove in Section I may be used. Moreover, in some cases, providing the mold comprises forming the mold using additive manufacturing, including using a 3D printing method described hereinabove in Section II.

Further, the use of a composition described herein to form a mold, in some instances, can permit injection of fluid materials at relatively high temperature. For example, in some embodiments, the fluid material is injected at a temperature of at least 40°C, at least 50°C, at least 75°C, at least 100°C, at least 150°C, at least 200°C, at least 220°C, at least 250°C, at least 270°C, or at least 300°C. In addition, use of a composition described herein may also permit the facile removal of the mold following solidification of the fluid material within the mold. For instance, in some embodiments of a method described herein, removing the mold from the article comprises dissolving or dispersing the mold in water or an aqueous solution.

Turning now in more detail to certain steps of methods described herein, methods described herein comprise providing a mold defining an interior volume. The mold can have any interior volume not inconsistent with the objectives of the present disclosure. For example, in some cases, the mold has an interior volume of 0.01-100 L, 0.01-50 L, 0.01-25 L, 0.01-10 L, 0.01-1 L, 0.01-0.5 L, 0.01-0.25 L, 0.01-0.1 L, 0.01-0.05 L, 0.05-100 L, 0.05-50 L, 0.05-25 L, 0.05-10 L, 0.05-1 L, 0.05-0.5 L, 0.05-0.25 L, 0.05-0.1 L, 0.1-100 L, 0.1-50 L, 0.1-25 L, 0.1-10 L, 0.1-1 L, 0.1-0.5 L, 0.1-0.25 L, 0.25-100 L, 0.25-50 L, 0.25-25 L, 0.25-10 L, 0.25-1 L, 0.25-0.5 L, 0.25-0.1, 0.5-100 L, 0.5-50 L, 0.5-25 L, 0.5-10 L, 0.5-5 L, 0.5-1 L, 1-100 L, 1-50 L, 1-25 L, 1-10 L, 1-5 L, 5-100 L, 5-50 L, 5-25 L, 5-10 L, 10-100 L, 10-50 L, 10-25 L, 25-100 L, 25-50 L, or 50-100 L. Moreover, the mold and its interior volume can have any shape not inconsistent with the objectives of the present disclosure. In some instances, the interior volume has a shape corresponding to the exterior surface of the final molded article to be formed by a method described herein.

A method described herein also comprises injecting a fluid material into the interior volume. The fluid material can be injected in any manner not inconsistent with the objectives of the present disclosure. For example, in some cases, the fluid material is injected at high pressure, such as a pressure of 50-150 MPa or 70-115 MPa. Lower pressures may also be used. Any equipment known to those of ordinary skill in the art may be used to inject a fluid material into an interior volume described herein.

Additionally, in some instances, the fluid material is injected at an elevated temperature, such as a temperature of at least 40°C, at least 50°C, at least 75°C, 100°C, 150°C, at least 200°C, at least 220°C, at least 250°C, at least 270°C, or at least 300°C. In some cases, the fluid material is injected at a temperature of 40-350°C, 40-300°C, 40-250°C, 40-220°C, 40-200°C, 40-150°C, 40-100°C, 40-75°C, 50-350°C, 50-300°C, 50-250°C, 50-220°C, 50-200°C, 50-150°C, 50-100°C, 50-75°C, 75-350°C, 75-300°C, 75-250°C, 75-220°C, 75-200°C, 75-150°C, 75-100°C, 100-350°C, 100-300°C, 100-250°C, 100-220°C, 100-200°C, 100-150°C, 150-350°C, 150-300°C, 150-250°C, 150-220°C, 150-200°C, 200-350°C, 200-300°C, 200-250°C, 220-300°C, 250-350°C, or 250-300°C. Other temperatures may also be used. Moreover, in some embodiments, the injection temperature is within 30°C, within 20°C, or within 10°C of a melting point of the material that is injected into the interior volume of the mold, where it is to be understood that melting point of the material is generally lower than the injection temperature (e.g., 1-30°C lower, 1-20°C lower, or 1-10°C lower).

In addition, any fluid material not inconsistent with technical objectives of the present disclosure may be used in a method described herein. In some embodiments, for example, the fluid material comprises a polymeric material, such as a polyurethane, a polyamide (such as a nylon), a polyalkylene (such as a polypropylene or a polyethylene), or a polyethylene terephthalate (PET). In some cases, the fluid material comprises a polystyrene (such as a high impact polystyrene (HIPS)), a polybutadiene, a poly-acrylonitrile, a polyacrylate, or a copolymer of two more of the foregoing, such as an acrylonitrile butadiene styrene (ABS) or an acrylonitrile styrene acrylate (ASA). In some embodiments, the fluid material comprises a polydimethylsiloxane (PDMS). Additionally, in some cases, the fluid material comprises a polyether ether ketone (PEEK). In other instances, the fluid material comprises a metallic material, such as an elemental metal or a combination, mixture, or alloy of metals. In other cases, the fluid material comprises a wax, such as paraffin wax, soy wax, or palm wax.

Methods described herein, in some cases, further comprise solidifying the fluid material within the mold, after injecting the fluid material into the mold. Such solidification can be carried out in any manner not inconsistent with the technical objectives of the present disclosure. In some embodiments, for example, solidifying the fluid material comprises cooling the fluid material below a melting point of the fluid material (e.g., a melting point described hereinabove). Such cooling can be passive (e.g., simply allowing time to pass, such that the fluid material reaches thermal equilibrium with its surroundings) or active (e.g., accelerating the reduction in temperature, rather than simply allowing time to pass, such as by directing relatively cool air or other fluid over or onto the fluid material or over or onto the surroundings of the fluid material).

Additionally, in some preferred embodiments, a method of forming a 3D article by molding further comprises removing the mold from the article following solidification of the fluid material to form the article. The mold can be removed in any manner not inconsistent with the technical objectives of the present disclosure. In some cases, for example, removing the mold comprises dissolving or dispersing the mold in water or an aqueous solution. Multiple washes of the mold with water or an aqueous solution may be used. Moreover, it is to be understood that an "aqueous solution" is a solution in which at least 50% of the solvent is water. In some embodiments, the aqueous solution comprises a glycol. In some cases, a glycol may include glycerol or polyethylene glycol. Other glycols may also be used. In some implementations, a glycol may be used in the aqueous solution in an amount of 10-40 wt. %, such as in an amount of 10 wt. %, 20 wt. %, 30 wt. %, or 40 wt. %, based on the total weight of the aqueous solution.

Additionally, it is to be understood that water (or aqueous solution), in some cases, can have a basic pH or an acidic pH. For instance, in some cases, the water or aqueous solution used to remove the mold has a pH of about 5 to about 7. In some embodiments, the water or aqueous solution used to remove the mold has a pH of about 7 to 14, 7 to 13, 7 to 12, 7 to 10, 8 to 14, 8 to 13, 8 to 12, or 8 to 10. As understood by one of ordinary skill in the art, such a pH can be obtained, for example, by the inclusion of a Bronsted-Lowry acid or base. For instance, in some cases, a strong acid or a strong base, such as hydrochloric acid or sodium hydroxide, respectively, may be included in water (or an aqueous solution) at a desired concentration to provide a desired pH, as understood by a person of ordinary skill in the art. For example, in some implementations, an aqueous solution of 3 M NaOH or a 6 M NaOH may be used. Moreover, other proton or hydroxide sources may also be used.

Moreover, in some embodiments, removing the mold according to a method described herein comprises immersing the mold (and the molded article contained therein) in water or aqueous solution (e.g., in a container). Further, in some cases, the mold (and the article within) is immersed for a specific time period at a specific temperature. For example, in some embodiments, the mold is immersed for 6-12 hours, 0.5-1 day, 1-5 days, or 1-3 days at a temperature of 25-50°C, 25-45°C, 25-40°C, 30-50°C, 30-45°C, or 35-40°C.

Further, in some cases, agitation is used in addition to exposing the mold to water or an aqueous solution. Such agitation may be provided, in some instances, by mechanical shaking or stirring or by sonication.

Moreover, in some embodiments, a method to form a 3D article by molding may yield a 3D article mold with various end uses, including to facilitate additional molding steps. In some implementations, the 3D article mold may be used to yield additional molds. For example, in some cases, a method may comprise providing a first mold defining a first interior volume, injecting a first fluid material into the interior volume of the first mold, and solidifying the first fluid material within the first interior volume of the first mold to form a first article. The first mold may comprise or be formed from any composition described hereinabove in Section I or formed using any method from Section II. In some implementations, the method may further comprise removing the first mold from the formed first article, and applying a second fluid material to the exterior surface of the first article. In some cases, applying the second fluid material to the exterior surface of the first article comprises disposing or immersing the first article within the second fluid material. In other embodiments, applying the second fluid material to the exterior surface of the first article comprises spraying or coating the exterior surface of the first article with the second fluid material.

Additionally, in some embodiments, the method further comprises solidifying the second fluid material (or a portion thereof) on the exterior surface of the first article to form a mold of the first article. Such a solidification step can be carried out, in some implementations, by simply solidifying the second fluid material while the second fluid material is in contact with or adhered or bonded to the exterior surface of the first article, which may occur in some cases due to hydrogen bonding, van der Waals forces, or other forces or bonding.

In some cases, a method described herein may further comprise removing the first article from the second fluid material (e.g., after the second fluid material has solidified as described above) to provide a second mold defining a second interior volume. That is, in some embodiments, a method may provide a second mold that is formed from the solidified second fluid material. In such an instance, removal of the first article can be considered to leave behind a void corresponding to the shape of the exterior surface of the first article. In some such implementations, a method described herein may further comprise injecting a third fluid material into the interior volume of the second mold. In some cases, the method further comprises solidifying the third fluid material within the interior volume of the second mold to form a second article. The third fluid material may be any material not inconsistent with the technical objectives of the present disclosure. In some embodiments, the third fluid material comprises a material described above for the first fluid material (e.g., a polymer, metal, or wax). Other fluid materials may also be used.

Similarly, it is to be understood that, in some cases, the second fluid material may be a material that can be applied as a liquid to the first article and solidify around the first article without altering the first article, particularly without altering the size or shape of the exterior surface of the first article. The fluid material used to form the second mold may be any material not inconsistent with the technical objectives of the present disclosure. In some embodiments, the liquid material may be a biocompatible material. In some cases, the biocompatible material includes a hydrogel material. As understood by one of ordinary skill in the art, a "hydrogel" can be considered to be a gel in which the liquid component is water or water-based. In some cases, a hydrogel may further comprise hyaluronic acid, chitosan, heparin, alginate, gelatin, fibrin, polyvinyl alcohol, polyethylene glycol, sodium polyacrylate, or mixtures thereof. Many suitable hydrogel materials will be readily apparent to those of ordinary skill in the art.

A non-limiting example of a method described herein is shown in Figures 1A-E. In Figure 1A, a 3D printed article (120), which is formed from a composition described in Section I, is shown in a container (100). The printed article (120) can serve as a mold (e.g., a first mold). In Figure 1B, the printed article or mold (120) is filled with a fluid material (e.g., a first fluid material) that has solidified to form a first article (140). In Figure 1C, the printed mold (120) has been removed to yield a first article of the solidified first fluid material (140). In Figure 1D, this article (140) has been cast in a hydrogel (160) within the container (100). The hydrogel (160) conforms to the exterior surface of the first article (140). Thus, upon solidification of the hydrogel (160), the hydrogel (160) forms or defines a second mold around the first article (140). In Figure 1E, the first article (140) has been removed to reveal a mold of hydrogel material (160) with an interior volume (180). It is further to be noted in Figures 1A-1E that conduits (depicted as vertically oriented conduits near the bottom of the container (100)) can be used to insert or remove a material from an interior volume in a specific step of the method (e.g., by injecting a fluid material into the interior volume, or by melting and extracting a previously solidified material from the interior volume).

### V. Molded 3D Articles

In another aspect, molded 3D articles are described herein. In some embodiments, a molded 3D article is formed from a method described hereinabove in Section IV, using a mold formed from a composition described hereinabove in Section I. Moreover, in some cases, the mold is formed using a method described hereinabove in Section II. An article formed by a molding process described herein can have any size, shape, and composition not inconsistent with the objectives of the present disclosure, and these features are not particularly limited. In some embodiments, for example, the molded article is formed from an injected material described hereinabove in Section IV, such as a polymer or a metal.

### EXAMPLES

Some embodiments of compositions for 3D printing are illustrated in the following non-limiting Examples.

Table 2 provides formulations of build materials according to some embodiments described herein. In Table 2, "Comp." means "Composition," and the amounts listed for a given composition are weight percents, based on the total weight of the composition. It is to be understood that all components of a given composition add up to 100 weight percent. Table 3 provides components of Compositions 1-5. Additionally, Table 2 and Table 3 include various abbreviations as follows: "MCM" in refers to monomeric curable material; "QY" refers to quinoline yellow; "E(10)-BPA-DA" refers to ethoxylated (10) bisphenol A diacrylate; "E(30)-BPA-DA" refers to ethoxylated (30) bisphenol A diacrylate; "HPA" refers to hydroxypropyl acrylate; "BEA" refers to 2-carboxyethyl acrylate; "AA" refers to acrylic acid; and "HEAA" refers to hydroxyethyl acrylamide.

**Table 2. Example Compositions.**

| **Component** | Comp. 1 | Comp. 2 | Comp. 3 | Comp. 4 | Comp. 5 |
|---|---|---|---|---|---|
| Formula (I)/(II) | 20-25 | 30-35 | 30-35 | 30-35 | 15-20 |
| MCM | 40-45 | 30-35 | 30-35 | 30-35 | 30-35 |
| Acrylate or Acrylamide Component | 30-35 | 30-35 | 30-35 | 30-35 | 45-50 |
| Photoinitiator | 1-3 | 1-3 | 1-3 | 1-3 | 1-3 |
| Colorant | 0.1-1 | 0.1-1 | 0.1-1 | 0.1-1 | 0.1-1 |

**Table 3. Example Components.**

| **Component** | Comp. 1 | Comp. 2 | Comp. 3 | Comp. 4 | Comp. 5 |
|---|---|---|---|---|---|
| Formula (I)/(II) | MA-PEG200-MA | MA-PEG200-MA | MA-PEG200-MA | MA-PEG200-MA | MA-PEG200-MA |
| MCM | E(10)-BPA-DA + E(30)-BPA-DA | E(10)-BPA-DA + E(30)-BPA-DA | E(10)-BPA-DA + E(30)-BPA-DA | E(10)-BPA-DA + E(30)-BPA-DA | E(10)-BPA-DA + E(30)-BPA-DA |
| Acrylate or Acrylamide Component | HPA | HPA + BEA | BEA | BEA + AA | BEA + HEAA |
| Photoinitiator | TPO-L | TPO-L | TPO-L | TPO-L | TPO-L |
| Colorant | QY | QY | QY | QY | QY |

Printed articles from the Compositions 1, 3, and 5 were tested using ASTM D638 to determine Young's Modulus of each Composition. The results are shown in Table 4.

**Table 4. Young's Modulus for Example Compositions.**

| **Composition** | **Young's Modulus (kPa)** |
|---|---|
| Composition 1 | 6,000 |
| Composition 3 | 122 |
| Composition 5 | 127,000 |

Discs of printed articles of Compositions 1-5 with a mass of 0.2 g were submerged in 20 g of an aqueous solution of 6 M NaOH in 30% glycerol. At each hour for 8 hours, the disc was removed from the aqueous solution and patted dry, and the diameter and height of the disc was measured to determine the total volume of the disc. The change in volume of the disc at each hour was averaged over the time course to determine the average rate of degradation for each composition. The average rate of degradation in shown in Table 5.

**Table 5. Average Rate of Degradation for Example Compositions.**

| **Composition** | **Average Rate of Degradation (mm³)** |
|---|---|
| Composition 1 | 9.3 |
| Composition 2 | 13.2 |
| Composition 3 | 14.7 |
| Composition 4 | 13.2 |
| Composition 5 | 15.2 |

Some additional non-limiting example Embodiments are as follows.

Embodiment 1. A composition for additive manufacturing comprising:
a compound having the structure of Formula (I) or Formula (II), wherein n is an integer between 4 and 40, and wherein the compound having the structure of Formula (I) and/or Formula (II) is present in an amount of 10-35 wt. %, based on the total weight of the composition; and
a monomeric curable material having the structure of Formula (III),
wherein the sum of p and q is an integer between 2 and 30,
wherein R₁ and R₂ are each independently H or CH₃,
wherein R₃ and R₄ are each independently a C₁-C₄ alkyl, and
wherein X is a linear or branched C₁-C₄ alkyl or a group with the structure: 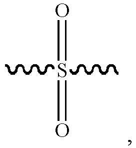
wherein 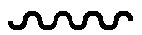 represents a point of attachment to the remainder of the structure of Formula (III).

Embodiment 2. The composition of Embodiment 1, wherein X is C(CH₃)₂.

Embodiment 3. The composition of Embodiment 1, wherein X is CH₂.

Embodiment 4. The composition of Embodiment 1, wherein X is a group with the structure: 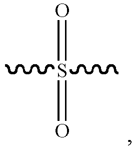 wherein 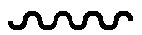 represents a point of attachment to the remainder of the structure of Formula (III).

Embodiment 5. The composition of any of the preceding Embodiments, wherein the monomeric curable material is present in an amount of 30-50 wt. %, based on the total weight of the composition.

Embodiment 6. The composition of any of the preceding Embodiments, wherein the composition further comprises an acrylate or acrylamide component.

Embodiment 7. The composition of Embodiment 6, wherein the acrylate or acrylamide component is present in an amount of 25-50 wt. %, based on the total weight of the composition.

Embodiment 8. The composition of Embodiment 6 or Embodiment 7, wherein the acrylate or acrylamide component comprises one or more (meth)acrylates.

Embodiment 9. The composition of Embodiment 8, wherein the one or more (meth)acrylates comprises carboxyethyl acrylate, hydroxypropyl acrylate, acrylic acid, or a mixture thereof.

Embodiment 10. The composition of Embodiment 6 or Embodiment 7, wherein the acrylate or acrylamide component comprises one or more acrylamides.

Embodiment 11. The composition of Embodiment 10, wherein the one or more acrylamides comprises dimethyl acrylamide, diethyl acrylamide, acryloyl morpholine, isopropyl acrylamide, dimethyl aminopropyl acrylamide, dimethyl aminopropyl acrylamide, hydroxyethyl acrylamide, or a mixture thereof.

Embodiment 12. The composition of Embodiment 10 or Embodiment 11, wherein the one or more acrylamides are present in an amount of 10-40 wt. %, based on the total weight of the composition.

Embodiment 13. The composition of any of the preceding Embodiments, wherein the composition further comprises a photoinitiator component.

Embodiment 14. The composition of Embodiment 13, wherein the photoinitiator component is present in an amount of 0.1-3 wt. %, based on the total weight of the composition.

Embodiment 15. A method of forming a three-dimensional article by additive manufacturing, the method comprising:
providing the composition of any of Embodiments 1-14; and
selectively curing a portion of the composition.

Embodiment 16. The method of Embodiment 15, wherein providing the composition comprises selectively depositing layers of the composition in a fluid state onto a substrate.

Embodiment 17. A printed three-dimensional article formed from the composition of any of Embodiments 1-14.

Embodiment 18. The article of Embodiment 17, wherein the article has a Young's Modulus greater than 100,000 kPa when measured according to ASTM D638.

Embodiment 19. A method of forming a three-dimensional article by molding, the method comprising:
providing a mold defining an interior volume;
injecting a fluid material into the interior volume of the mold;
solidifying the fluid material within the interior volume of the mold to form the article; and
removing the mold from the formed article,
wherein the mold comprises or is formed from the composition of any of Embodiments 1-14.

Embodiment 20. The method of Embodiment 19, wherein providing the mold comprises forming the mold using additive manufacturing.

Embodiment 21. The method of Embodiment 19 or Embodiment 20, wherein the fluid material comprises a polymeric material.

Embodiment 22. The method of Embodiment 19 or Embodiment 20, wherein the fluid material comprises a wax.

Embodiment 23. The method of any of Embodiments 19-22, wherein removing the mold from the article comprises dissolving or dispersing the mold in water or an aqueous solution.

Embodiment 24. The method of Embodiment 23, wherein the aqueous solution comprises a glycol.

Embodiment 25. A method of forming a three-dimensional article by molding, the method comprising:
providing a first mold defining a first interior volume;
injecting a first fluid material into the interior volume of the first mold;
solidifying the first fluid material within the interior volume of the first mold to form a first article;
removing the first mold from the formed first article;
applying a second fluid material to the exterior surface of the first article; and solidifying the second fluid material on the exterior surface of the first article to form a mold of the first article;
wherein the first mold comprises or is formed from the composition of any of Embodiments 1-14.

Embodiment 26. The method of Embodiment 25, wherein the method further comprises removing the first article from the second fluid material to provide a second mold defining a second interior volume.

Embodiment 27. The method of Embodiment 26, wherein the method further comprises injecting a third fluid material into the second interior volume of the second mold.

Embodiment 28. The method of Embodiment 27, wherein the method further comprises solidifying the third fluid material within the second interior volume of the second mold to form a second article.

Embodiment 29. The method of any of Embodiments 25-28, wherein the second fluid material is a biocompatible material.

Embodiment 30. The method of Embodiment 29, wherein the biocompatible material is a hydrogel.

All patent documents referred to herein are incorporated by reference in their entireties. Various embodiments of the invention have been described in fulfillment of the various objectives of the invention. It should be recognized that these embodiments are merely illustrative of the principles of the present invention. Numerous modifications and adaptations thereof will be readily apparent to those skilled in the art without departing from the spirit and scope of the invention.

## Claims

1. A composition for additive manufacturing comprising:
a compound having the structure of Formula (I) or Formula (II): 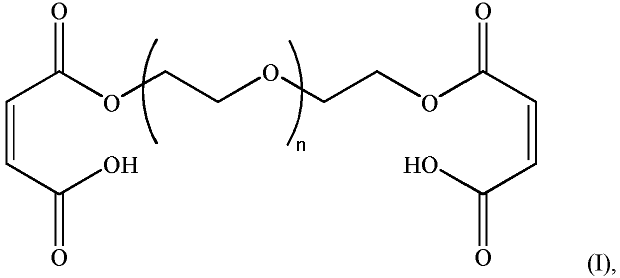 and 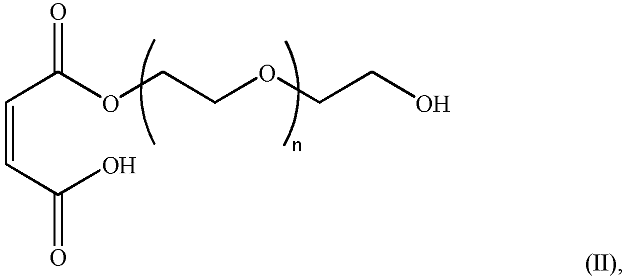
wherein n is an integer between 4 and 40, and
wherein the compound having the structure of Formula (I) and/or Formula (II) is present in an amount of 10-35 wt. %, based on the total weight of the composition; and
a monomeric curable material having the structure of Formula (III): 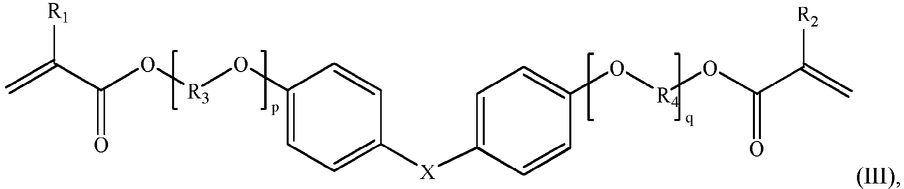
wherein the sum of p and q is an integer between 2 and 30,
wherein R₁ and R₂ are each independently H or CH₃,
wherein R₃ and R₄ are each independently a C₁-C₄ alkyl, and
wherein X is a linear or branched C₁-C₄ alkyl or a group with the structure: 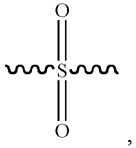
wherein 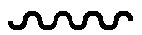 represents a point of attachment to the remainder of the structure of Formula (III).

2. The composition of claim 1, wherein X is C(CH₃)_{2;} or
wherein X is CH₂; or wherein X is a group with the structure: 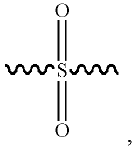
wherein 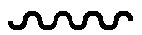 represents a point of attachment to the remainder of the structure of Formula (III).

3. The composition of claims 1 or 2, wherein the monomeric curable material is present in an amount of 30-50 wt. %, based on the total weight of the composition.

4. The composition of any one of claims 1 to 3, wherein the composition further comprises an acrylate or acrylamide component.

5. The composition of claim 3, wherein the acrylate or acrylamide component is present in an amount of 25-50 wt. %, based on the total weight of the composition.

6. The composition of claim 3, wherein the acrylate or acrylamide component comprises one or more (meth)acrylates.

7. The composition of claim 5, wherein the one or more (meth)acrylates comprises carboxyethyl acrylate, hydroxypropyl acrylate, acrylic acid, or a mixture thereof.

8. The composition of claim 3, wherein the acrylate or acrylamide component comprises one or more acrylamides.

9. The composition of claim 7, wherein the one or more acrylamides comprises dimethyl acrylamide, diethyl acrylamide, acryloyl morpholine, isopropyl acrylamide, dimethyl aminopropyl acrylamide, dimethyl aminopropyl acrylamide, hydroxyethyl acrylamide, or a mixture thereof.

10. The composition of claim 7, wherein the one or more acrylamides are present in an amount of 10-40 wt. %, based on the total weight of the composition.

11. The composition of any one of claims 1 to 9, wherein the composition further comprises a photoinitiator component, which is preferably present in an amount of 0.1-3 wt. %, based on the total weight of the composition.

12. A method of forming a three-dimensional article by additive manufacturing, the method comprising:
providing the composition of any one of claims 1 to 11; and
selectively curing a portion of the composition.

13. A method of forming a three-dimensional article by molding, the method comprising:
providing a mold defining an interior volume;
injecting a fluid material into the interior volume of the mold;
solidifying the fluid material within the interior volume of the mold to form the article; and
removing the mold from the formed article,
wherein the mold comprises or is formed from the composition of any one of claims 1 to 11.

14. The method of claim 12, wherein providing the mold comprises forming the mold using additive manufacturing.

15. The method according to claims 13 or 14, wherein removing the mold from the article comprises dissolving or dispersing the mold in water or an aqueous solution.
